# EUROPÄISCHE PATENTSCHRIFT

(11) **EP 2 593 507 B1**
(45) Veröffentlichungstag und Bekanntmachung des Hinweises auf die Patenterteilung: **25.01.2017**
(21) Anmeldenummer: 11729102.1
(22) Anmeldetag: 27.06.2011
(51) Int. Cl.: C08K 5/315, C08K 5/01, C08K 5/3435, C08K 5/3492, C08L 25/12, C08L 25/16

(54) **WITTERUNGSSTABILISIERTE STYROLCOPOLYMER FORMMASSEN**
WEATHERING-RESISTANT STYRENE COPOLYMER MOULDING COMPOSITIONS
MATIÈRES À MOULER À BASE DE COPOLYMÈRE DE STYRÈNE RÉSISTANT AUX INTEMPÉRIES

(30) Priorität: 18.01.2011 EP 11151249; 12.07.2010 EP 10169250; 12.07.2010 EP 10169243; 12.07.2010 EP 10169257; 12.07.2010 EP 10169245
(43) Veröffentlichungstag der Anmeldung: 22.05.2013
(73) Patentinhaber: INEOS Styrolution Group GmbH, 60325 Frankfurt (DE)
(72) Erfinder: MINKWITZ, Rolf, 68167 Mannheim (DE)
(74) Vertreter: Jacobi, Markus Alexander
(86) Internationale Anmeldenummer: PCT/EP2011/060727
(87) Internationale Veröffentlichungsnummer: WO 2012/007270

(56) Entgegenhaltungen:
- DE-A1- 10 316 198
- US-A- 4 957 953
- DATABASE WPI Week 197825 Thomson Scientific, London, GB; AN 1978-44882A XP002661761, -& JP 53 052560 A (MITSUI TOATSU CHEM INC) 13. Mai 1978 (1978-05-13)
- DATABASE WPI Week 199917 Thomson Scientific, London, GB; AN 1999-190952 XP002661762, -& CN 1 201 052 A (CHI MEI IND CO LTD) 9. Dezember 1998 (1998-12-09)
- DATABASE WPI Week 200508 Thomson Scientific, London, GB; AN 2005-068390 XP002661763, -& JP 2004 346237 A (UMG ABS KK) 9. Dezember 2004 (2004-12-09)

## Beschreibung

Die vorliegende Erfindung betrifft thermoplastische Formmassen aus hochglänzenden, witterungsbeständigen Acrylnitrilcopolymeren insbesondere für automobile Außenanwendungen. Stabilisierte thermoplastische Formmassen unterschiedlichster Art sind bekannt und aufgrund ihres für viele Anwendungen günstigen Eigenschaftsprofils breit einsetzbar.

Beispielsweise werden in der US-A-4 877 826 bewitterbare Styrolpolymer-blends aus gepropften EPDM bzw. Acrylatkautschuken in Styrolacrylnitrilcopolymeren beschrieben, die mit Polyalkylglycol stabilisiert werden. Nachteilig an dieser Ausführungsform ist der geringe Anfangsglanz und die geringe Witterungsbeständigkeit.

In der US-A-5 580 928 werden Mischungen aus Maleinsäureanhydrid-Olefin-copolymeren und Styrolacrynitrilcopolymeren für den automobilen Außenbereich offenbart. Nachteilig an dieser Ausführungsform ist die starke Vergilbung der Formmassen und ihre geringe Witterungsstabilität.

Aus der US-A-4,692,486 sind Stabilisatormischungen enthaltend Verbindungen der Formeln (VI) und (VIII) der vorliegenden Anmeldung für Polypropylen, Polyurethan und Polystyrol bekannt, wobei die eingesetzten Mengen der einzelnen Stabilisatorkomponenten kleiner oder gleich 0,1 Gew.-% ist.

Die DE-A-103 16 198 offenbart Stabilisatorgemische für die unterschiedlichsten Arten von thermoplastischen Polymeren, exemplarisch hervorgehoben wird Polypropylen. Bei den Stabilisatorgemischen handelt es sich um Dreistoffgemische. Für die drei Komponenten dieses Stabilisatorgemischs werden jeweils eine Vielzahl möglicher generischer und spezieller Verbindungen beschrieben. Als lediglich eine von vielen Möglichkeiten werden auch Stabilisatorgemische beschrieben, die auch Verbindungen der Formeln (VI), (VII) und (VIII) der vorliegenden Anmeldung enthalten. Jede der drei Stabilisatorkomponenten kann dabei bevorzugt in Mengen von 0,05 bis 1 Gew.-%, bezogen auf das organische Material, vorliegen. Nachteilig an dieser Ausführungsform ist die starke Farbänderung während der Bewitterung und die Abnahme des Glanzes.

Der vorliegenden Erfindung lag daher die Aufgabe zugrunde, verbesserte hochglänzende Formmassen auf der Basis von Acrylnitrilcopolymeren bereitzustellen.

Demgemäß wurden neue und verbesserte thermoplastische Formmasse gefunden, enthaltend:
a) 77,7 bis 99,7 Gew.-% eines oder mehrerer Styrolcopolymere als Komponente A
b) 0,1 bis 10% Gew.-% der Verbindungen der Formeln I, II, III, IV und V oder deren Isomeren als Komponente B. 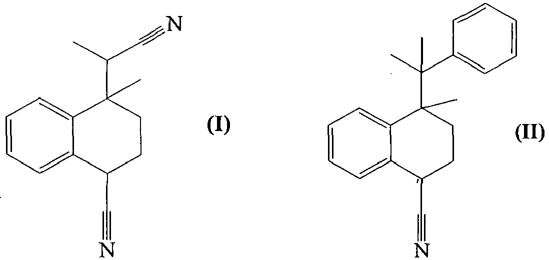 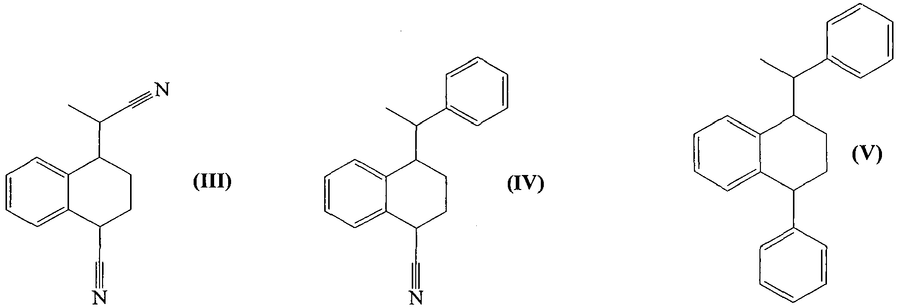
c) 0,2 bis 0,9 Gew.-% einer Verbindung der Formel (VI) als Komponente C: 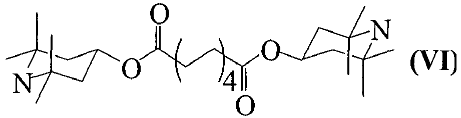
d) 0,2 bis 0,7 Gew.-% eines Gemisches der Formel (VII) als Komponente D: 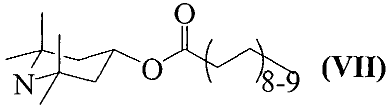
e) 0 bis 0,5 Gew.-% einer Verbindung der Formel (VIII) als Komponente E: 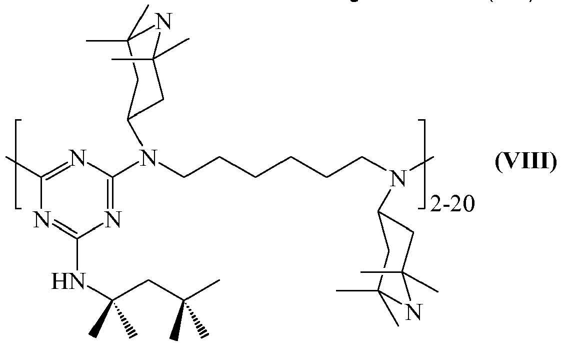 oder 0 bis 0,5 Gew.-% einer Verbindung der Formel (IX): 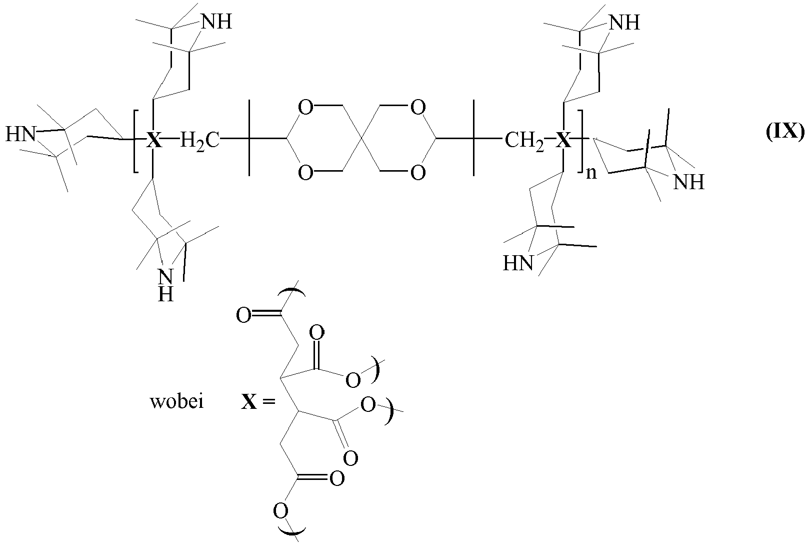 oder 0 bis 0,5 Gew.-% einer Verbindung der Formel (X): 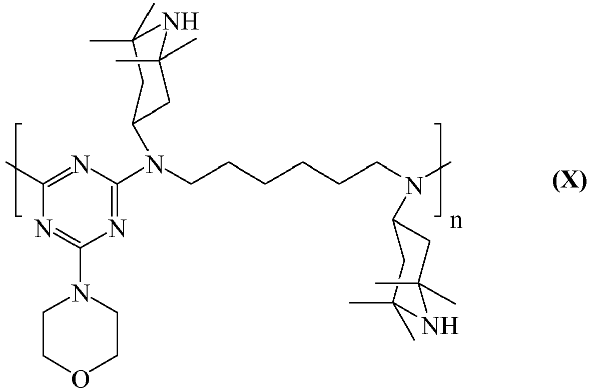 oder 0 bis 0,5 Gew.-% einer Verbindung der Formel (XI): 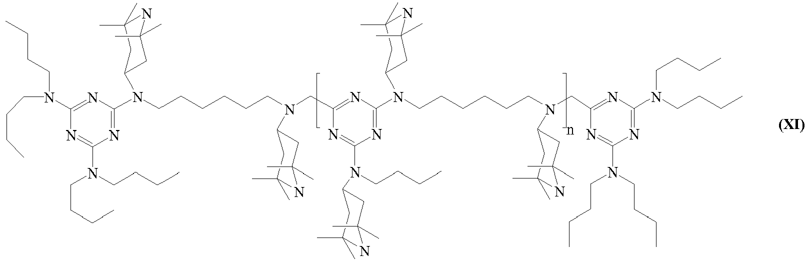
f) 0 bis 10 Gew.-% eines oder mehrerer Zusatzstoffe, die von den Komponenten B, C,D und E verschieden sind, als Komponente F, wobei die Gew.-% jeweils auf das Gesamtgewicht der Komponenten A bis F bezogen sind und zusammen 100 Gew.-% ergeben. Durch die Auswahl jeder einzelnen Komponente und ihrer Mengenanteile weisen die erfindungsgemäßen Formmassen gegenüber den bekannten stabilisierten Formmassen eine nochmals verbesserte Witterungsbeständigkeit, d.h. eine nochmals verbesserte Wärme-, Licht- und/oder Sauerstoffbeständigkeit, auf.

Die erfindungsgemäßen Gegenstände, Verfahren und Verwendungen werden im Folgenden beschrieben.

Die erfindungsgemäßen Formmassen enthalten, bezogen auf das Gesamtgewicht der Komponenten A, B, C, D, E, und F welches insgesamt 100 Gew.-% ergibt,
a) 77,7 bis 99,7 Gew.-%, bevorzugt 80 bis 99,2 Gew.-%, besonders bevorzugt 96,2 bis 99,2 Gew.-% der Komponente A
b) 0,1 bis 10 Gew.-%, bevorzugt 0,1 bis 5 Gew.-%, besonders bevorzugt 0,2 bis 2 Gew.-% der Komponente B,
c) 0,2 bis 0,9 Gew.-%, bevorzugt 0,2 bis 0,7 Gew.-%, besonders bevorzugt 0,2 bis 0,6 Gew.-% der Komponente C,
d) 0,2 bis 0,7 Gew.-%, bevorzugt 0,2 bis 0,4 Gew.-% der Komponente D, mit der Maßgabe, wenn Komponente D 0 Gew.-% beträgt (also keine Komponente D vorhanden ist), die Komponente E 0,01 bis 0,5 Gew.-%, bevorzugt 0,1 bis 0,5 Gew.-%, besonders bevorzugt 0,2 bis 0,5 Gew.-% einer der Verbindungen VIII, IX, X oder XI beträgt,
e) 0 bis 0,5 Gew.-%, bevorzugt 0,1 bis 0,5 Gew.-%, besonders bevorzugt 0,2 bis 0,4 Gew.-% der Komponente E
f) 0 bis 10 Gew.-%, bevorzugt 0 bis 8 Gew.-%, besonders bevorzugt 0 bis 5 Gew.-% der Komponente F, und

Das Gewichtsverhältnis Komponente C zu Komponente D liegt in der Regel im Bereich von 4:1 bis 0,25:1, bevorzugt 4:1 bis 1:1, besonders bevorzugt 3:1 bis 1:1.

Das Gewichtsverhältnis Komponente D zu E liegt in der Regel im Bereich von 2:1 bis 0,5:1.

### Komponente A:

Als Komponente A enthalten die erfindungsgemäßen thermoplastischen Formmassen ein oder mehrere Acrylnitrilcopolymere. Dabei können in den Copolymeren neben Acrylnitril beliebige geeignete Comonomere vorliegen. Bevorzugt handelt es sich um ein Styrol-Acrylnitril-Copolymer, ein alpha-Methylstyrol-Acrylnitril-Copolymer, ein N-Phenylmaleinimid-StyrolCopolymer oder N-Phenylmaleinimid-Styrol-Acrylnitril-Terpolymer.

Als Komponente A sind grundsätzlich alle dem Fachmann bekannten und in der Literatur beschriebenen Styrol-Acrylnitril-Copolymere, α-Methylstyrol-Acrylnitril-Copolymere, N-Phenylmaleinimid-Styrol-Acrylnitril-Terpolymer oder deren Mischungen einsetzbar, sofern deren Mischungen eine Viskositätszahl VZ (gemessen nach DIN 53727 bei 25 °C als 0,5 gew.-%ige Lösung in Dimethylformamid; diese Messmethode gilt auch für alle im folgenden genannten Viskositätszahlen VZ) gleich oder kleiner als 85 ml/g haben.

Bevorzugte Komponenten A sind aufgebaut aus 50 bis 90 Gew.-%, bevorzugt 60 bis 85 Gew.-%, insbesondere 65 bis 81 Gew.-%, Styrol und 10 bis 50 Gew.-%, bevorzugt 20 bis 40 Gew.-%, insbesondere 19 bis 35 Gew.-%, Acrylnitril sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht der Komponente A und zusammen 100 Gew.-% ergeben.

Weiterhin bevorzugte Komponenten A sind aufgebaut aus 50 bis 90 Gew.-%, bevorzugt 60 bis 80 Gew.%, insbesondere 65 bis 78 Gew.-%, α-Methylstyrol und 10 bis 50 Gew.-%, bevorzugt 20 bis 40 Gew.-%, insbesondere 22 bis 35 Gew.-%, Acrylnitril sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht der Komponente A und zusammen 100 Gew.-% ergeben.

Ebenfalls bevorzugte Komponenten A sind aufgebaut aus 50 bis 90 Gew.-%, bevorzugt 60 bis 80 Gew.%, insbesondere 65 bis 78 Gew.-%, N-Phenylmaleinimid und 10 bis 50 Gew.-%, bevorzugt 20 bis 40 Gew.-%, insbesondere 22 bis 35 Gew.-%, Styrol bzw. Acrylnitril sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht der Komponente A und zusammen 100 Gew.-% ergeben.

Ebenfalls bevorzugte Komponenten A sind Mischungen dieser Styrol-Acrylnitril-Copolymere, α-Methylstyrol-Acrylnitril-Copolymere, N-Phenylmaleinimid-Styrol-Copolymere und N-Phenylmaleinimid-Acrylnitril-Styrol-Terpolymere.

Als oben genannte weitere Monomere sind alle copolymerisierbaren Monomere einsetzbar wie beispielsweise p-Methylstyrol, t-Butylstyrol, Vinylnaphthalin, Alkylacrylate und/oder Alkylmethacrylate, beispielsweise solche mit C₁- bis C₈-Alkylresten, N-Phenylmaleinimid oder deren Mischungen.

Die Copolymere der Komponente A lassen sich nach bekannten Methoden herstellen. Sie lassen sich z. B. durch radikalische Polymerisation, insbesondere durch Emulsions-, Suspensions-, Lösungs- oder Massepolymerisation herstellen.

### Komponente B:

Als Komponente B enthalten die erfindungsgemäßen thermoplastischen Formmassen ein oder mehrere Verbindungen der Formeln (I), (II), (III), (IV) und/oder (V).

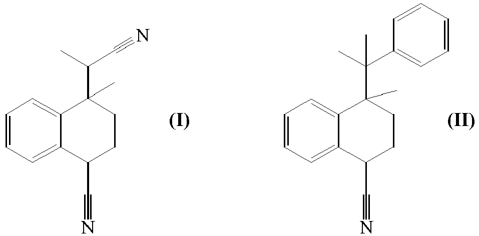

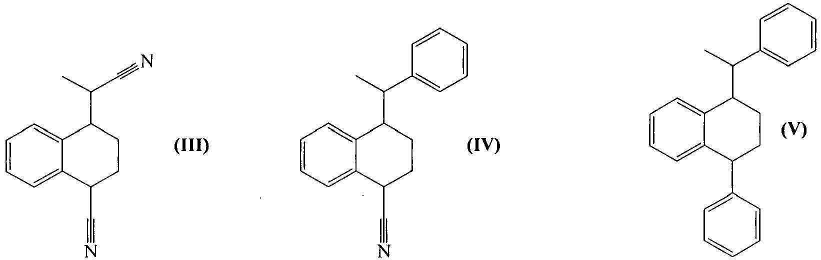

Diese Verbindungen lassen sich mit Hilfe eines Co-Reagenzes aus Acrylnitril mit Styrol beziehungsweise α-Methylstyrol darstellen. Ihre Herstellung ist dem Fachmann bekannt und in der Literatur beschrieben (Schellenberg et al., Makromolekulare Chemie (1992), 193, 3063-3071). Sie lassen sich auch in einer kontinuierlich betriebenen Masse-/Lösungspolymerisation von Styrol bzw. α-Methylstyrol aus dem Rückmonomer/Lösungsmittelgemisch gewinnen (Schellenberg et al., Angewandte Makromolekulare Chemie (1991), 3138, 123-134)

### Komponente C:

Als Komponente C der erfindungsgemäßen Formmassen wird eine Verbindung der Formel (VI) eingesetzt:

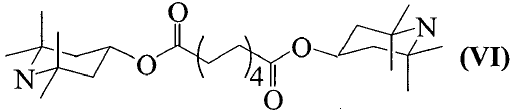

Dieses sterisch gehinderte Amin (CAS Nummer 52829-07-9) und seine Herstellung sind dem Fachmann bekannt und in der Literatur beschrieben (s. beispielsweise US-A-4 396 769 und den darin zitierten Literaturstellen). Vertrieben wird es von BASF SE unter der Bezeichnung Tinuvin^{®} 770.

### Komponente D:

Als Komponente D der erfindungsgemäßen Formmassen wird eine Gemisch der Formel (VII) eingesetzt:

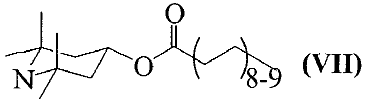

Dieses sterisch gehinderte Amin (CAS Nummer 167078-06-0) und seine Herstellung aus 2,2,6,6-tetramethyl-4-piperinol und Stearin beziehungsweise Palmitinsäure sind dem Fachmann bekannt und in der Literatur beschrieben (Carlsson et al., Can. Journal of Polymer Science, Polymer Chemistry Edition (1982), 20(2), 575-82). Vertrieben wird es von Cytec Industries unter der Bezeichnung Cyasorb^{®} 3853.

### Komponente E:

Als Komponente E der erfindungsgemäßen Formmassen kann eine Verbindung der Formel (VIII) eingesetzt werden:

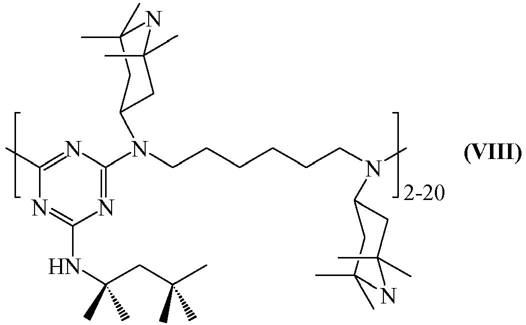

Dieses sterisch gehinderte Amin (CAS Nummer 71878-19-8) und seine Herstellung sind dem Fachmann bekannt und in der Literatur beschrieben (s. beispielsweise EP-A-93 693 und den darin zitierten Literaturstellen). Vertrieben wird es von BASF SE unter der Bezeichnung Chimassorb^{®} 944.

Als weitere Komponente E der erfindungsgemäßen Formmassen kann eine Verbindung der Formel (IX) eingesetzt werden:

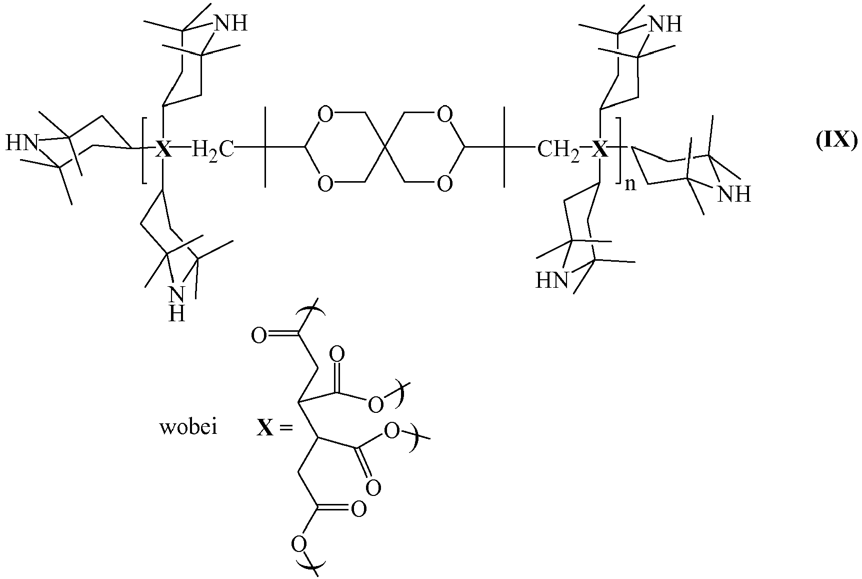

Dieses sterisch gehinderte Amin (CAS Nummer 101357-37-3) und seine Herstellung sind dem Fachmann bekannt und in der Literatur beschrieben (s. beispielsweise US-A-5 208 132 und den darin zitierten Literaturstellen). Vertrieben wird es von ADEKA unter der Bezeichnung Adeka Stab^{®} LA-68.

Als weitere Komponente E der erfindungsgemäßen Formmassen kann eine Verbindung der Formel (X) eingesetzt werden:

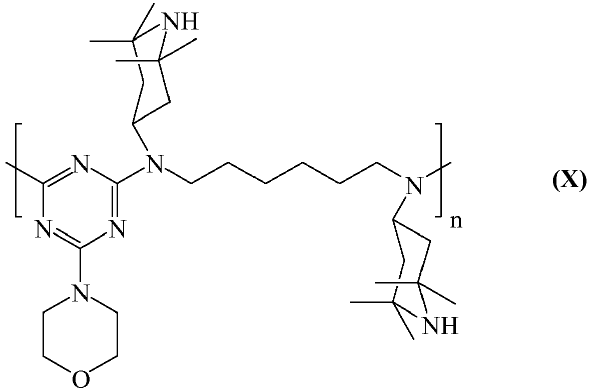

Dieses sterisch gehinderte Amin (CAS Nummer 82451-48-7) und seine Herstellung sind dem Fachmann bekannt und in der Literatur beschrieben (s. beispielsweise US-A-4 331 586 und den darin zitierten Literaturstellen). Vertrieben wird es von der Cytec Industries unter der Bezeichnung Cyasorb^{®} UV-3346.

Als weitere Komponente E der erfindungsgemäßen Formmassen kann eine Verbindung der Formel (XI) eingesetzt werden:

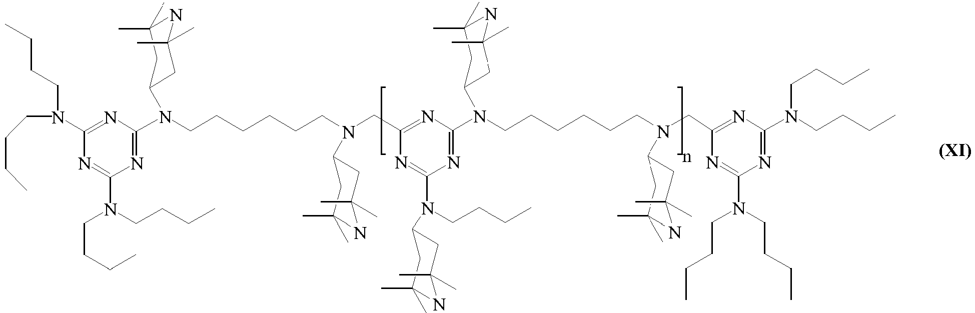

Dieses sterisch gehinderte Amin (CAS Nummer 192268-64-7) und seine Herstellung sind dem Fachmann bekannt und in der Literatur beschrieben (s. beispielsweise EP-A-782 994 und den darin zitierten Literaturstellen). Vertrieben wird es von BASF unter der Bezeichnung Chimassorb^{®} 2020.

### Komponente F:

Neben den Komponenten A, B, C, D und E können die erfindungsgemäßen Formmassen einen oder mehrere, von den Komponenten C, D und E verschiedene Zusatzstoffe bzw. Additive, die für Kunststoffmischungen typisch und gebräuchlich sind, enthalten.

Als solche Zusatzstoffe bzw. Additive seien beispielsweise genannt: Farbstoffe, Pigmente, Färbemittel, Antistatika, Antioxidantien, Stabilisatoren zur Verbesserung der Thermostabilität, zur Erhöhung der Lichtstabilität, zum Anheben der Hydrolysebeständigkeit und der Chemikalienbeständigkeit, Mittel gegen die Wärmezersetzung und insbesondere die Schmier-/Gleitmittel, die für die Herstellung von Formkörpern bzw. Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen. Wärmestabilisatoren bzw. Oxidationsverzögerer sind üblicherweise Metallhalogenide (Chloride, Bromide, Iodide), die sich von Metallen der Gruppe I des Periodensystems der Elemente ableiten (wie Li, Na, K, Cu).

Als Komponente F geeignete Stabilisatoren sind die üblichen gehinderten Phenole, aber auch "Vitamin E" bzw. analog aufgebaute Verbindungen. Auch Benzophenone, Resorcine, Salicylate, Benzotriazole und andere Verbindungen sind geeignet. Diese werden üblicherweise in Mengen von 0 bis 2 Gew.-%, bevorzugt 0,01 bis 2 Gew.-% (bezogen auf das Gesamtgewicht der erfindungsgemäßen Formmassen) verwendet.

Geeignete Gleit- und Entformungsmittel sind Stearinsäuren, Stearylalkohol, Stearinsäureester bzw. allgemein höhere Fettsäuren, deren Derivate und entsprechende Fettsäuregemische mit 12 bis 30 Kohlenstoffatomen. Die Mengen dieser Zusätze liegen -sofern vorhanden - im Bereich von 0,05 bis 1 Gew.-% (bezogen auf das Gesamtgewicht der erfindungsgemäßen Formmassen).

Auch Siliconöle, oligomeres Isobutylen oder ähnliche Stoffe kommen als Zusatzstoffe in Frage, die üblichen Mengen betragen - sofern vorhanden - 0,05 bis 5 Gew.-% (bezogen auf das Gesamtgewicht der erfindungsgemäßen Formmassen). Pigmente, Farbstoffe, Farbaufheller, wie Ultramarinblau, Phthalocyanine, Titandioxid, Cadmiumsulfide, Derivate der Perylentetracarbonsäure sind ebenfalls verwendbar.

Verarbeitungshilfsmittel und Stabilisatoren, Schmiermittel und Antistatika werden üblicherweise in Mengen von 0 bis 2 Gew.-%, bevorzugt 0,01 bis 2 Gew.-% (bezogen auf das Gesamtgewicht der erfindungsgemäßen Formmassen) verwendet.

Die Herstellung der erfindungsgemäßen Formmassen aus den Komponenten kann nach jeder beliebigen Weise nach allen bekannten Methoden erfolgen. Vorzugsweise erfolgt jedoch das Abmischen der Komponenten durch Schmelzevermischung, beispielsweise gemeinsames Extrudieren, Kneten oder Verwalzen der Komponenten, z. B. bei Temperaturen im Bereich von 160 bis 400°C, bevorzugt von 180 bis 280°C, wobei die Komponenten, in einer bevorzugten Ausführungsform, zuvor aus den bei den jeweiligen Herstellschritten erhaltenen Reaktionsmischungen teilweise oder vollständig isoliert worden sind

Die erfindungsgemäßen Formmassen können zu Folien oder Formkörpern verarbeitet werden. Diese Folien oder Formkörpern sind insbesondere für den Einsatz im Automobilaußenbereich, d.h. unter Witterungseinfluß, geeignet.

Diese Folien oder Formkörpern können nach den bekannten Verfahren der Thermoplastverarbeitung aus den erfindungsgemäßen Formmassen hergestellt werden. Insbesondere kann die Herstellung durch Extrudieren, oder Spritzgießen erfolgen.

Die erfindungsgemäßen Formmassen weisen gegenüber den bekannten stabilisierten Formmassen eine nochmals verbesserte Witterungsbeständigkeit, d.h. eine nochmals verbesserte Wärme-, Licht- und/oder Sauerstoffbeständigkeit, auf.

Die Erfindung wird anhand der nachfolgenden Beispiele näher erläutert.

### Beispiele:

### Meßmethoden:

Als ein Maß für die Witterungsbeständigkeit wurde an Prüfkörpern (60 x 60 x 2mm, hergestellt nach ISO 294 in einem Familienwerkzeug, bei einer Massetemperatur von 260°C und einer Werkzeugtemperatur von 60°C) eine Bewitterung gemäß Xenontest nach ISO 4892/2, Verfahren A, außen, durchgeführt. Nach den in Tabelle 1 genannten Bewitterungszeiten erfolgten die Messung des Oberflächenglanzes aller Proben nach DIN 67530 bei 60° Betrachtungswinkel.

### Änderung im Farbraum ΔE:

Als weiteres Maß für die Witterungsbeständigkeit wurde die Änderung im Farbraum ΔE nach DIN 52 336 aus ΔL, ΔA und ΔB nach DIN 6174 berechnet.

### Einsatzstoffe

Komponenten oder Produkte mit vorangestelltem "V-" sind nicht erfindungsgemäß und dienen zum Vergleich.
Als Komponente A (bzw. V-A zum Vergleich) wurden eingesetzt:
   - A-i:: ein Styrol-Acrylnitril-Copolymer mit 35% Acrylnitril (CAS Nummer 107-13-1) und 65% Styrol (CAS Nummer 100-42-5) mit einem Molekulargewicht von 104.000 gemessen mit Hilfe von SEC-MALLS (Chi-san Wu, Handbook of size exclusion chromatography and related techniques, Volume 91, Chapter 21, Page 19).
   - A-ii:: ein alpha-Methylstyrol-Acrylnitril-Copolymer mit 30.5% Acrylnitril und 69.5% alpha-Methylstyrol (CAS Nummer 98-83-9) mit einem Molekulargewicht von 92.000 gemessen mit Hilfe von SEC-MALLS (Chi-san Wu, Handbook of size exclusion chromatography and related techniques, Page 19).
   - V-A-iii:: ein Maleinsäureanhydrid-isopren-copolymer mit einem Gew.-Verhältnis von 1:1 beider Komponenten in einem Blend mit einem Styrolacrynitrilcopolymer mit 25% Acrylnitril und 75% Styrol. Das Maleinsäureanhydrid-isopren-copolymer und das Styrolacrylnitrilcopolymer liegen jeweils zu 50 Gew.-% vor. Das Styrolacrylnitrilcopolymer hat ein Molekulargewicht von 171.000 gemessen mit Hilfe von SEC-MALLS.
   - V-A-iv:: ein von der BASF SE unter der Bezeichnung Polystyrol® 158K kommerziell vertriebenes Polystyrol.
Als Komponente B (bzw. V-B zum Vergleich) wurden eingesetzt:
   - B-i:: Verbindung der Formeln (III) zu Verbindung der Formel (IV) zu Verbindung der Formel (V) im Verhältnis von 1:2:60
   - B-ii:: Verbindung der Formel (I) zu Verbindung der Formel (II) Im Verhältnis 3:1
   - V-B-iii: Verbindungen der Formeln I,II, III, IV und V im Verhältnis 3:1:7:70:20
Als Komponente C (bzw. V-C zum Vergleich) wurde eingesetzt:
   - C-i:: eine Verbindung der Formel (VI), kommerziell vertrieben von BASF SE unter der Bezeichnung Tinuvin^{®} 770.
   - V-C-ii:: eine Verbindung der Formel (XII), kommerziell vertrieben von BASF SE unter der Bezeichnung Tinuvin^{®} 765. 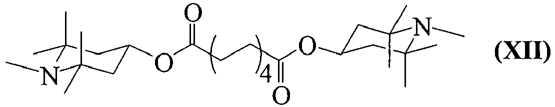
Als Komponente D (bzw. V-D zum Vergleich) wurde eingesetzt:
   - D-i:: eine Verbindung der Formel (VII), kommerziell vertrieben von Cytec Industries unter der Bezeichnung Cyasorb^{®} 3853.
Als Komponente E (bzw. V-E zum Vergleich) wurde eingesetzt:
   - E-i:: eine Verbindung der Formel (VIII), kommerziell vertrieben von BASF SE unter der Bezeichnung Chimassorb^{®} 944.
   - E-ii:: eine Verbindung der Formel (IX), kommerziell vertrieben von Adeka unter der Bezeichnung Adeka Stab^{®} LA-68.
   - E-iii:: eine Verbindung der Formel (X), kommerziell vertrieben von Cytec Industries unter der Bezeichnung Cyasorb^{®} UV-3346.
Als Komponente F (bzw. V-F zum Vergleich) wurde eingesetzt:
   F-i: Ruß Typ Black Pearls 880, kommerziell vertrieben von Cabot Corporation
   F-ii: Anthrachinon und Pyrazolongelb im Verhältnis (2:1)

### Herstellung der Formmassen und Formkörper:

Die Komponenten A, B, C und D (jeweilige Gewichtsteile siehe Tabelle 1) wurden in einem Zweischneckenextruder ZSK53 von Fa. Werner & Pfleiderer bei 250°C homogenisiert und in ein Wasserbad extrudiert. Die Extrudate wurden granuliert und getrocknet. Aus den Granulaten stellte man auf einer Spritzgussmaschine bei 250°C Schmelzetemperatur und 60°C Werkzeugoberflächentemperatur Prüfkörper her und bestimmte die in Tabelle 1 genannten Eigenschaften.

**Tabelle 1: Zusammensetzung und Eigenschaften der Formmassen (Beispiele mit vorangestelltem V sind Vergleichsbeipiele)**

| Beispiel | 1 | 2 | 3 | 4 | 5 | 6 | V-7 | V-8 | V-9 | V-10 | V-11 |
|---|---|---|---|---|---|---|---|---|---|---|---|
| Zusammensetzung | | | | | | | | | | | |
| A-i | 96,2 | | 96,2 | 96,2 | 96,2 | | | | 97 | | 96,7 |
| A-i | | 96,55 | | | | 96,55 | | | | 86,97 | |
| V-A-iii | | | | | | | 100 | | | | |
| V-A-iv | | | | | | | | 99,8 | | | |
| B-i | 0,8 | | 0,8 | 0,8 | 0,8 | | | | 0 | | 0,3 |
| B-ii | | 0.45 | | | | 0,45 | | | | | |
| V-B-iii | | | | | | | | | | 10,53 | |
| C-i: | 0,5 | 0,5 | 0,5 | 0,5 | 0,5 | 0,5 | | 0,1 | 0,5 | 0,5 | |
| V-C-ii | | | | | | | | | | | 0,5 |
| D-i | 0,5 | 0,5 | 0,25 | 0,25 | 0,25 | 0,25 | | | 0,5 | 0,5 | 0,5 |
| E-i | | | 0,25 | | | 0.25 | | 0,1 | | | |
| E-i | | | | 0,25 | | | | | | | |
| E-iii | | | | | 0,25 | | | | | | |
| F-i | | | | | | 2 | | | 2 | | |
| F-ii | 2 | 2 | 2 | 2 | 2 | | 2 | | | 2 | 2 |
| Eigenschaften | | | | | | | | | | | |
| Glanz nach | | | | | | | | | | | |
| | | | | | | | | | | | |
| 0 h BWZ | 101 | 103 | 101 | 102 | 101 | 104 | 102 | 101 | 102 | 101 | 99 |
| 1000 h BWZ | 91 | 103 | 94 | 93 | 92 | 103 | 0,5 | 7 | 60 | 53 | 57 |
| 1500 h BWZ | 62 | 101 | 63 | 62 | 65 | 99 | 1 | 1 | 7 | 4 | 2 |
| ΔE | | | | | | | | | | | |
| | | | | | | | | | | | |
| 0 h BWZ | 0 | 0 | 0 | 0 | 0 | 0 | 0 | 0 | 0 | 0 | 0 |
| 1000 h BWZ | 0,5 | 0,4 | 0,5 | 0,6 | 0,6 | 0,4 | 9,1 | 3,8 | 6,3 | 7,4 | 6,8 |
| 1500 h BWZ | 0,8 | 0,5 | 0,9 | 0,8 | 1,0 | 0,5 | 13,5 | 7,9 | 11,4 | 12,4 | 11,7 |

Die Beispiele belegen, dass die erfindungsgemäßen Formmassen gegenüber den bekannten stabilisierten Formmassen eine nochmals verbesserte Witterungsbeständigkeit, d.h. eine nochmals verbesserte Wärme-, Licht-, und/oder Sauerstoffbeständigkeit, aufweisen. Die Zusammensetzung ist in Gewichtsanteilen gegeben und die Abkürzung BWZ steht für Bewitterungszeit.

## Patentansprüche

1. Thermoplastische Formmassen enthaltend
a) 77,7 bis 99,7 Gew.-% eines oder mehrerer Styrolcopolymere als Komponente A, wobei man als Komponente A ein Copolymerisat aus Acrylnitril, Styrol und/oder α-Methylstyrol, Phenylmaleinimid, Methacrylsäuremethylester oder deren Mischungen einsetzt,
b) 0,1 bis 10 Gew.-% der Verbindungen der Formeln I, II, III, IV und V oder deren Isomeren als Komponente B: 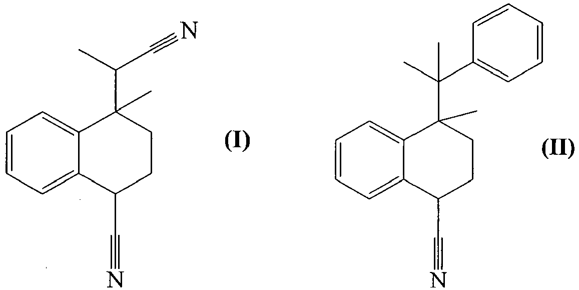 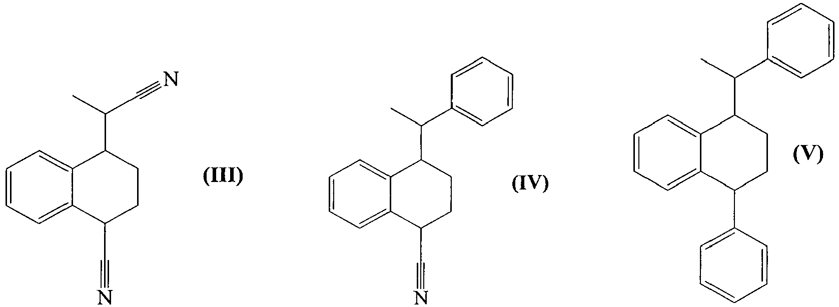
c) 0,2 bis 0,9 Gew.-% einer Verbindung der Formel (VI) als Komponente C: 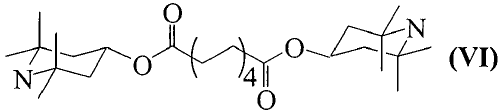
d) 0,2 bis 0,7 Gew.-% eines Gemisches der Formel (VII) als Komponente D: 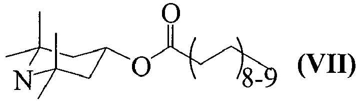
e) 0 bis 0,5 Gew.-% einer Verbindung der Formel (VIII) als Komponente E: 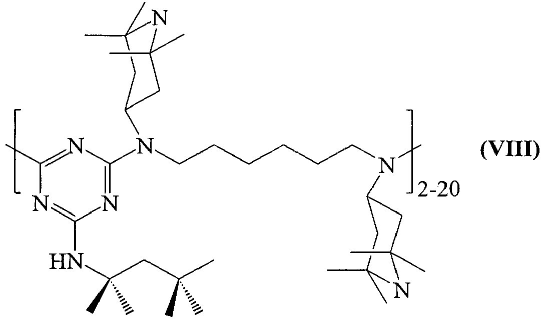 oder 0 bis 0,5 Gew.-% einer Verbindung der Formel (IX): 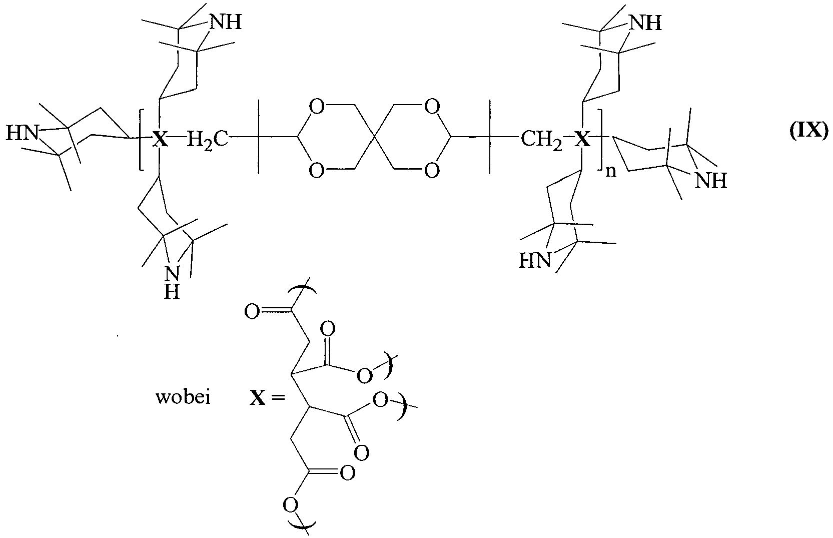 oder 0 bis 0,5 Gew.-% einer Verbindung der Formel (X): 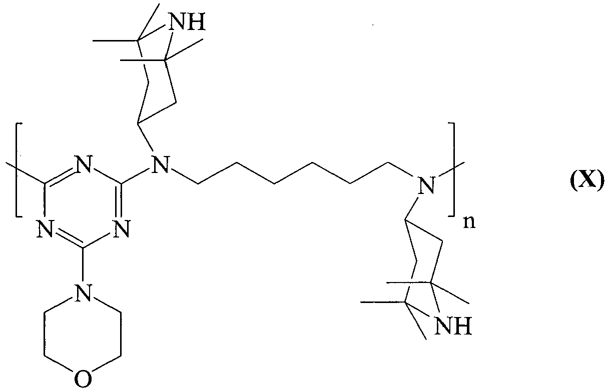 oder 0 bis 0,5 Gew.-% einer Verbindung der Formel (XI): 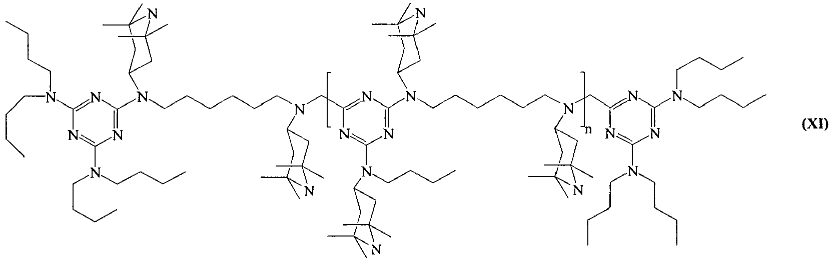
f) 0 bis 10 Gew.-% eines oder mehrerer Zusatzstoffe, die von den Komponenten C,D und E verschieden sind, als Komponente F,
wobei die Gew.-% jeweils auf das Gesamtgewicht der Komponenten A bis F bezogen sind und zusammen 100 Gew.-% ergeben.

2. Thermoplastische Formmassen nach Anspruch 1, **dadurch gekennzeichnet, dass** die Komponente E 0,1 bis 0,5 Gew.-% einer der Verbindungen VIII, IX, X oder XI beträgt, wobei die Gew.-% jeweils auf das Gesamtgewicht der Komponenten A bis F bezogen sind und zusammen 100 Gew.-% ergeben.

3. Thermoplastische Formmassen nach Anspruch 1, **dadurch gekennzeichnet, dass** die Komponente E 0,2 bis 0,5 Gew.-% eine oder mehrere der Verbindungen VIII, IX, X oder XI beträgt, wobei die Gew.-% jeweils auf das Gesamtgewicht der Komponenten A bis G bezogen sind und zusammen 100 Gew.-% ergeben.

4. Thermoplastische Formmassen nach einem der Ansprüche 1 bis 3, **dadurch gekennzeichnet, dass** der Gewichtsanteil von Acrylnitril bezogen auf Komponente A mindestens 15% und höchstens 40% beträgt.

5. Thermoplastische Formmassen nach einem der Ansprüche 1 bis 4, **dadurch gekennzeichnet, dass** der Gewichtsanteil von B 0,1 bis 5 Gew.-% beträgt.

6. Thermoplastische Formmassen nach einem der Ansprüche 1 bis 4, **dadurch gekennzeichnet, dass** der Gewichtsanteil von B 0,2 bis 2 Gew.-% beträgt.

7. Thermoplastische Formmassen nach einem der Ansprüche 1 bis 6, **dadurch gekennzeichnet, dass** man die Komponenten D zu C im Gewichtsverhältnis von 3:1 bis 1:1 und Komponenten D zu E im Gewichtsverhältnis von 2:1 bis 0,5:1 einsetzt.

8. Verwendung der thermoplastischen Formmassen nach einem der Ansprüche 1 bis 7 zur Herstellung von Formteilen mit hochglänzender, chemikalienresistenter Oberfläche für den Außenbereich von Kraftfahrzeugen.

## Claims

1. Thermoplastic molding compositions comprising
a) 77.7 to 99.7% by weight of one or more styrene copolymers, as component A, wherein use is made as component A of a copolymer of acrylonitrile, styrene and/or α-methylstyrene, phenylmaleimide, methyl methacrylate or mixtures thereof,
b) 0.1 to 10% by weight of the compounds of the formulae I, II, III, IV, and V, or isomers thereof, as component B: 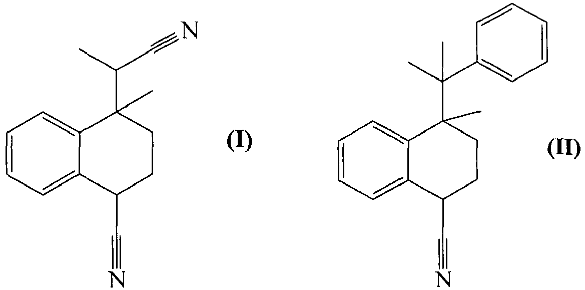 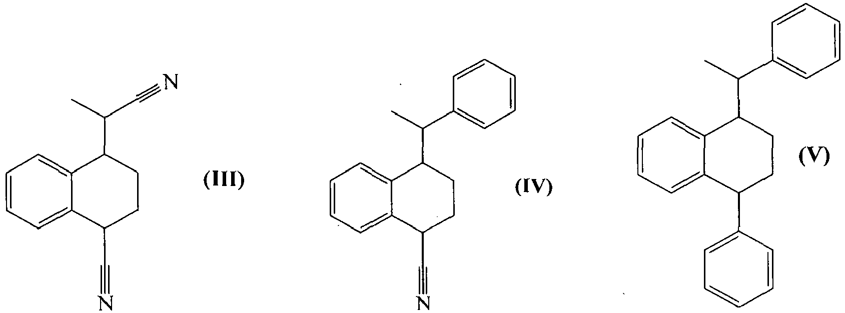
c) 0.2 to 0.9% by weight of a compound of the formula (VI), as component C: 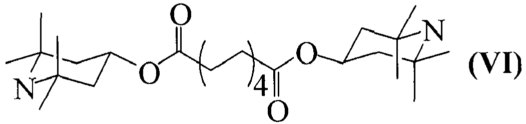
d) 0.2 to 0.7% by weight of a mixture of the formula (VII), as component D: 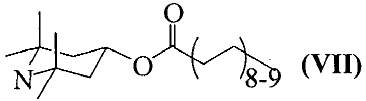
e) 0 to 0.5% by weight of a compound of the formula (VIII) as component E: 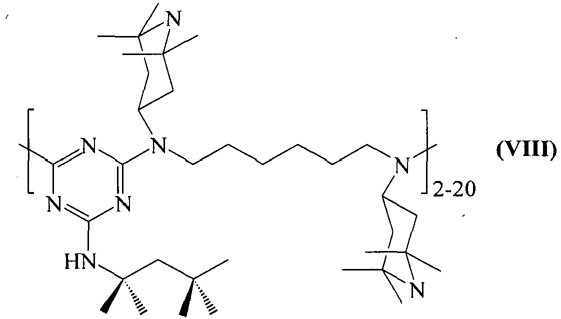 or 0 to 0.5% by weight of a compound of the formula (IX): 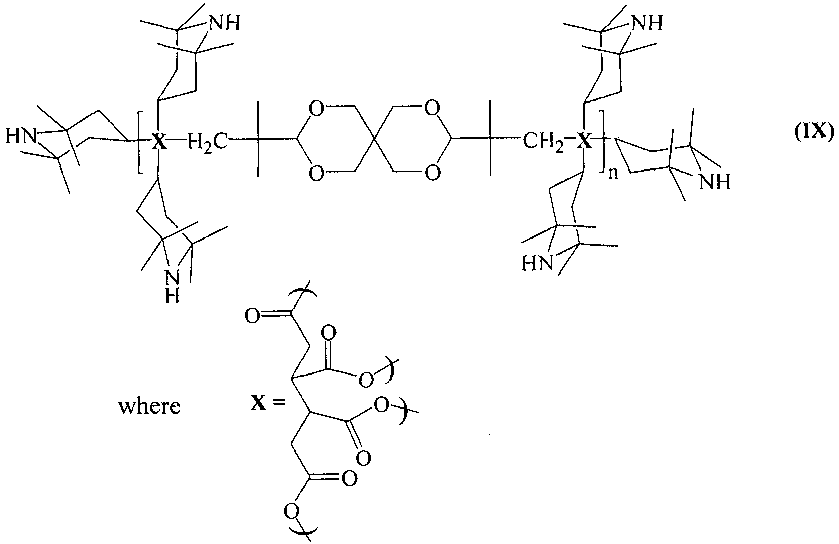 or 0 to 0.5% by weight of a compound of the formula (X): 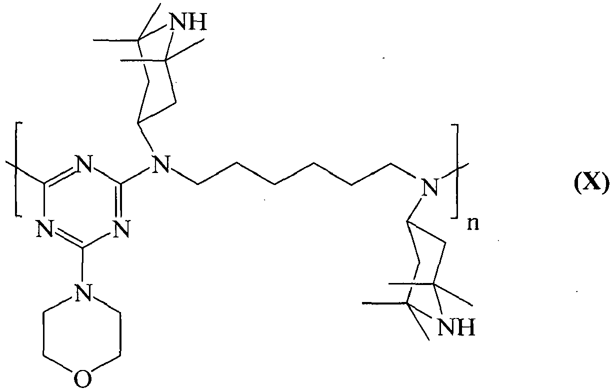 or 0 to 0.5% by weight of a compound of the formula (XI): 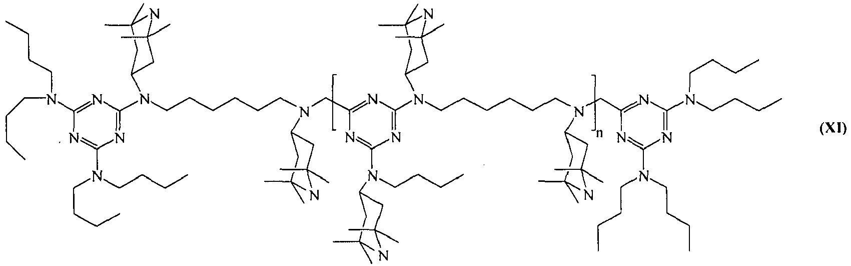
f) 0 to 10% by weight of one or more additives which are different from components C, D, and E, as component F,
wherein the percentage by weight being based in each case on the total weight of components A to F and together making up 100% by weight.

2. Thermoplastic molding compositions according to claim 1, wherein component E amounts to 0.1 to 0.5% by weight of one of the compounds VIII, IX, X, or XI, the percentage by weight being based in each case on the total weight of components A to F and together making up 100% by weight.

3. The thermoplastic molding compositions according to claim 1, wherein component E amounts to 0.2 to 0.5% by weight of one or more of the compounds VIII, IX, X, or XI, the percentage by weight being based in each case on the total weight of components A to G and together making up 100% by weight.

4. The thermoplastic molding compositions according to any of claims 1 to 3, wherein the weight fraction of acrylonitrile, based on component A, is at least 15% and not more than 40%.

5. The thermoplastic molding compositions according to any of claims 1 to 4, wherein the weight fraction of B is 0.1 to 5% by weight.

6. The thermoplastic molding compositions according to any of claims 1 to 4, wherein the weight fraction of B is 0.2 to 2% by weight.

7. The thermoplastic molding compositions according to any of claims 1 to 6, wherein components D and C are used in a weight ratio of 3:1 to 1:1 and components D and E are used in a weight ratio of 2:1 to 0.5:1.

8. Use of the thermoplastic molding compositions according to any of claims 1 to 7 for producing moldings with a high-gloss, chemical-resistant surface for the exterior area of motor vehicles.

## Revendications

1. Matières à mouler thermoplastiques, contenant
a) 77,7 à 99,7 % en poids d'un ou plusieurs copolymères du styrène en tant que composant A, auquel cas on utilise en tant que composant A un copolymère d'acrylonitrile, de styrène et/ou d'α-méthylstyrène, de phénylmaléimide, de l'ester méthylique de l'acide méthacrylique ou de mélanges de ceux-ci,
b) 0,1 à 10 % en poids des composés de Formules I, II, III, IV et V, ou de leurs isomères, en tant que composant B : 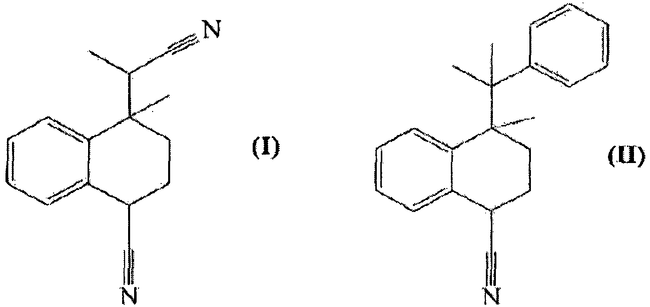 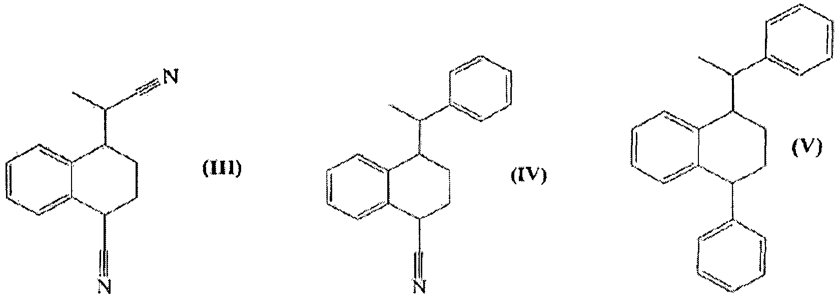
c) 0,2 à 0,9 % en poids d'un composé de Formule (VI), en tant que composant C : 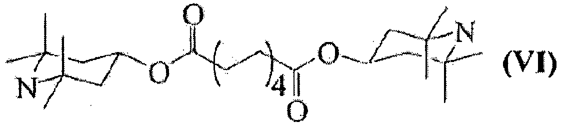
d) 0,2 à 0,7 % en poids d'un mélange de Formule (VII), en tant que composant D : 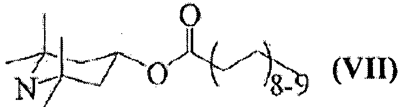
e) 0 à 0,5 % en poids d'un composé de Formule (VIII), en tant que composant E : 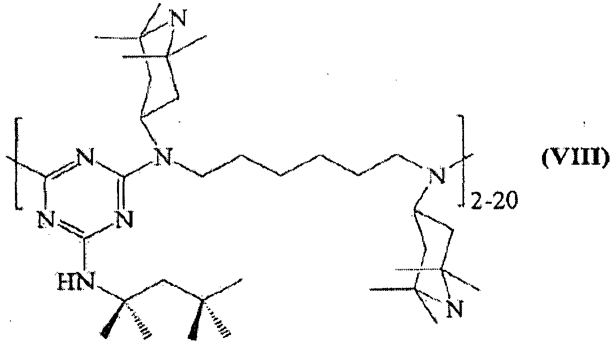 ou 0 à 0,5 % en poids d'un composé de formule (IX) : 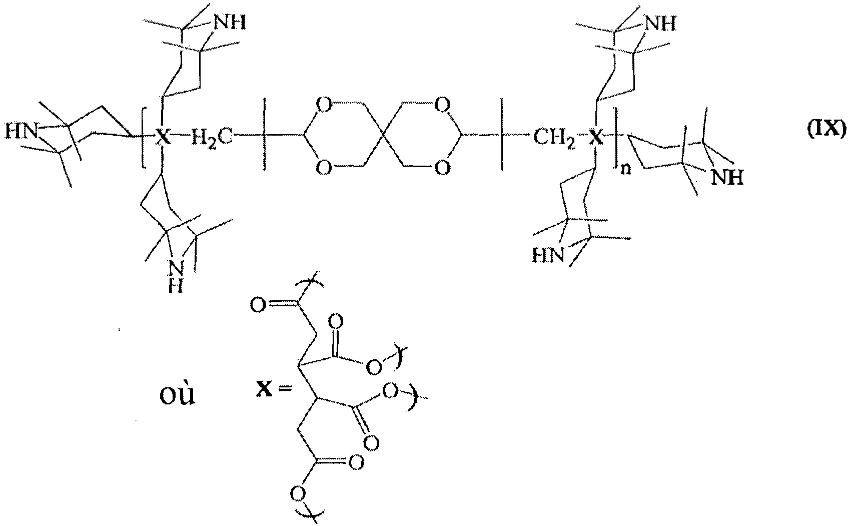 ou 0 à 0,5 % en poids d'un composé de Formule (X) : 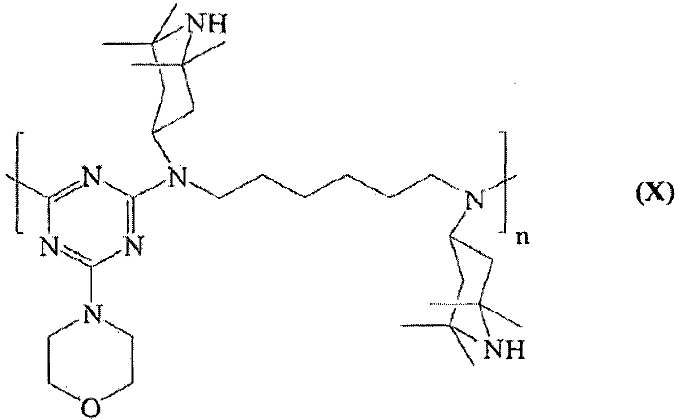 ou 0 à 0,5 % en poids d'un composé de formule (XI) : 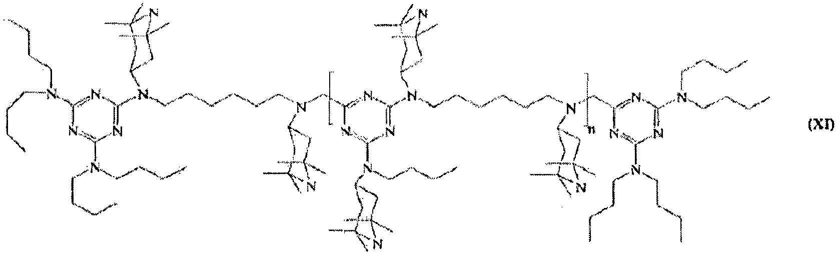
f) 0 à 10 % en poids d'un ou plusieurs additifs, qui sont différents des composants C, D et E, en tant que composant F,
les pourcentages en poids étant chacun rapportés au poids total des composants A à F, et faisant ensemble 100 % en poids.

2. Matières à mouler thermoplastiques selon la revendication 1, **caractérisées en ce que** le composant E représente 0,1 à 0,5 % en poids de l'un des composés VIII, IX, X ou XI, les pourcentages en poids étant chacun rapportés au poids total des composants A à F, et faisant ensemble 100 % en poids.

3. Matières à mouler thermoplastiques selon la revendication 1, **caractérisées en ce que** le composant E représente 0,2 à 0,5 % en poids d'un ou plusieurs des composés VIII, IX, X ou XI, les pourcentages en poids étant chacun rapportés au poids total des composants A à G, et faisant ensemble 100 % en poids.

4. Matières à mouler thermoplastiques selon l'une des revendications 1 à 3, **caractérisées en ce que** la proportion pondérale de l'acrylonitrile, par rapport au composant A, est d'au moins 15 % et d'au plus 40 %.

5. Matières à mouler thermoplastiques selon l'une des revendications 1 à 4, **caractérisées en ce que** la proportion pondérale de B est de 0,1 à 5 % en poids.

6. Matières à mouler thermoplastiques selon l'une des revendications 1 à 4, **caractérisées en ce que** la proportion pondérale de B est de 0,2 à 2 % en poids.

7. Matières à mouler thermoplastiques selon l'une des revendications 1 à 6, **caractérisées en ce qu'**on utilise les composants D et C selon un rapport au poids de 3:1 à 1:1 et les composants D et E selon un rapport en poids de 2:1 à 0,5:1.

8. Utilisation des matières à mouler thermoplastiques selon l'une des revendications 1 à 7 pour la fabrication d'objets moulés présentant une surface à brillant élevé et résistante aux agents chimiques pour l'extérieur de véhicules à moteur.
